# EUROPÄISCHE PATENTSCHRIFT

(11) **EP 0 317 765 B1**
(45) Veröffentlichungstag und Bekanntmachung des Hinweises auf die Patenterteilung: **04.08.1993**
(21) Anmeldenummer: 88117459.3
(22) Anmeldetag: 20.10.1988
(51) Int. Cl.: C08L 83/04, C08K 5/54

(54) **Feuchtigkeitshärtende Einkomponenten-Polysiloxanmassen**
Monocomponent polysiloxane compositions curable by humidity
Compositions à un composé à base de polysiloxanes durcissables à l'humidité

(30) Priorität: 31.10.1987 DE 3736993
(43) Veröffentlichungstag der Anmeldung: 31.05.1989
(73) Patentinhaber: BAYER AG, 51368 Leverkusen (DE)
(72) Erfinder: Achtenberg, Theo, D.I., D-5090 Leverkusen 3 (DE); Metzinger, Hans-Gerd, Dr., D-5090 Leverkusen 1 (DE); Sattlegger, Hans, Dr., D-5070 Odenthal-Glöbusch (DE); Sockel, Karl-Heinz, D-5090 Leverkusen 1 (DE); Weber, Wilhelm, Dr., D-5000 Köln 80 (DE)

(56) Entgegenhaltungen:
- DE-A- 3 323 912
- GB-A- 2 137 217
- US-A- 4 555 420

## Beschreibung

Die Erfindung betrifft 1-Komponenten-Siliconsysteme - im folgenden 1-K-RTV-Massen genannt - die unter Feuchtigkeitseinwirkung durch Abspaltung von Alkoholen aushärten, im unvulkanisierten Zustand gute Lagerstabilität besitzen, gute Haftung auf vielen Substraten aufweisen und die unter Verwendung stabilisierend wirkender Silylderivate von N-Alkylbenzamiden hergestellt werden.

Es sind bereits eine Reihe von 1-K-RTV-Systemen bekannt geworden, die unter Abspaltung von Alkoholen härten. In US-PS 3 161 614 werden Formulierungen beschrieben auf der Basis von Polydimethylsiloxanen, die an jedem Kettenende 2 oder 3 Alkoxygruppen besitzen. Als Vernetzungskatalysatoren werden u.a. Dialkylzinndicarboxylate und Amine genannt. In der US-PS 3 686 357 werden Dialkylzinndicarboxylate mit bestimmte Aminoalkylsilanderivaten kombiniert. Außerdem wird erwähnt, daß Silane, die mit OH-Gruppen reagieren können, sog. "Scavenger", sich stabilisierend auf die unvulkanisierten Produkte auswirken. Die Kombination von Zinnkatalysatoren mit Aminoalkylsilanen in Formulierungen, die die genannten Alkoxy-endgestoppten Polysiloxane enthalten, ist auch Bestandteil der japanischen Patentschrift 53 102956 und der EP-PS 21 859. In US-PS 4 395 526 werden ebenfalls die genannten Alkoxy-endgestoppten Polysiloxane verwendet. Es werden Metallkatalysatoren, vor allem Dialkylzinn-(IV)-derivate, Amine (sog. "Accelerator") und mit OH-Gruppen reagierende Silane (sog. "Scavenger") als erfindungsgemäße Bestandteile beschrieben. Die Patentschrift beinhaltet als "Scavenger" eine Aufzählung der meisten in der Herstellung von 1K-RTV-Massen bekannten Silanderivate mit dem Hinweis, daß Amidosilane bevorzugt seien. Ähnliche Systeme unter Mitverwendung von Aminoalkylalkoxysilanen als Haftungsverbesserer beschreibt GB-A 2 137 217, ebenso US 4 555 420. Amidosilan- und Alkoxysilanreste enthaltende 1K- RTV-Massen wiederum sind Gegenstand der DE-PS 1 247 646 und EP-PS 22 976. In DE-PS 3 114 773 wird schließlich gezeigt, daß sich Amidosilane spontan mit Aminoalkylsilanen umsetzen. Die Umsetzungsprodukte werden als Vernetzer in 1K-RTV-Systemen beschrieben. Die nach den genannten Patentschriften hergestellten Formulierungen besitzen Nachteile. DE-A 3 323 912 beschreibt den gleichzeitigen Einsatz von mindestens 2 verschiedenen N-haltigen mehrfunktionellen Silanen zur Herstellung geruchsneutraler Systeme. Formulierungen nach US-PS 3 161 614, US-PS 3 686 357, JP-PS 53 102956 und EP-PS 21 859 weisen relativ kurze Lagerstabilität im unvulkanisierten Zustand auf. Nach Lagerung, insbesondere bei erhöhter Temperatur, geht relativ rasch die Vernetzungsfähigkeit verloren. Verwendet man, wie in US-PS 4 395 526 als bevorzugt beschrieben, Amidosilanzusätze als "Scavenger", so läßt sich gute Lagerstabilität erzielen. Eine für den gewünschten Effekt ausreichende Menge der in der genannten Patentschrift aufgeführten N-Methylcarbonamidosilane aliphatischer Carbonsäuren führt jedoch zum Verlust der Hafteigenschaften auf vielen Untergründen. Nach DE-OS 3 114 773 schließlich läßt sich die gewünschte Eigenschaftskombination erzielen. Es ist aber ein relativ hoher Anteil an silylierten Aminoalkylsilanen bzw. von Amidosilanen kombiniert mit Aminoalkylsilanen erforderlich. Hieraus können sich Nachteile bei der Reversionsstabilität der Vulkanisate ergeben.

Es bestand also die Aufgabe, Alkoxysysteme mit guter Haftung und guter Lagerstabilität zu entwickeln.

Gegenstand der vorliegenden Erfindung sind unter Ausschluß von Feuchtigkeit lagerfähige und bei Zutritt von Feuchtigkeit härtende Polysiloxanmassen, erhältlich durch Vermischen von
(1) 100 Gew.-Teilen eines Polydimethylsiloxans, das Diorganyloxy-organosilyl- oder Triorganyloxysilyl-Endgruppen enthält und eine Viskosität zwischen 0,1 und 1000 Pas besitzt,
(2) 0 bis 100 Gew.-Teilen eines α,ω-Bis-(trimethylsiloxy)-polydimethylsiloxans, das eine Viskosität zwischen 0,04 und 10 Pas besitzt,
(3) 0 bis 5 Gew.-Teilen eines Alkoxysilans der Zusammensetzung

   R¹ₐSi(OR²)₄₋ₐ ,

   wobei R¹ ein gegebenenfalls substituierter aliphatischer, olefinisccher oder aromatischer Kohlenwasserstoffrest mit 1 bis 6 C-Atomen, R² ein aliphatischer Kohlenwasserstoffrest mit 1 bis 6 C-Atomen und a gleich 0 oder 1 sein kann,
(4) 0,1 bis 5 Gew.-Teilen eines Aminoalkylalkoxysilans, das eines oder mehrere über mindestens 3 C-Atome mit einem Siliciumatom verbundene basische Stickstoffatome enthält,
(5) 5 bis 250 Gew.-Teilen eines verstärkenden oder eines nicht verstärkenden Füllers oder eines Füllstoffgemisches,
(6) 0,01 bis 2 Gew.-Teilen eines metallorganischen Katalysators und
(7) 0,5 bis 5 Gew.-Teilen eines Amidosilans,
dadurch gekennzeichnet, daß das Amidosilan (7) die Zusammensetzung 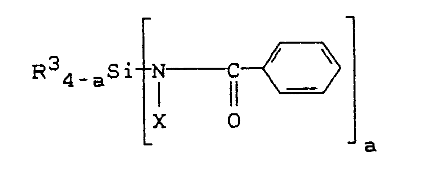
besitzt, wobei als Rest R³ ein gegebenenfalls substituierter aliphatischer, olefinischer oder aromatischer Kohlenwasserstoffrest mit 1 bis 6 C-Atomen, ein gegebenenfalls verzweigter Alkoxyrest mit 1 bis 6 C-Atomen oder ein Gemisch solcher Substituenten vorliegt, X für einen Alkylrest mit 1 bis 4 C-Atomen, bevorzugt Methyl, steht, und a die Werte 1 oder 2 annehmen kann, wobei das Amidosilan im Verhältnis zur Komponente (4) im Überschuß eingesetzt wird.

Überraschenderweise wurde gefunden, daß man unter Verwendung der genannten Amidosilane Produkte mit ausgezeichneter Lagerstabilität erzielen kann, ohne daß es zu Nachteilen bei der Haftung kommt. Die auf diese Weise erhaltenen 1-K-RTV-Systeme zeichnen sich außerdem durch rasche Härtung, geringe Oberflächenklebrigkeit und gute Reversionsstabilität der Vulkanisate aus.

Die als Bestandteil (1) genannten Polydimethylsiloxane mit Diorganyloxyorganosilyl- bzw. Triorganyloxysilyl-Endgruppen können aus α,ω-Dihydroxypolydimethylsiloxanen und Alkoxysilanen, wie sie als Bestandteil (3) definiert sind unter Verwendung geeigneter Katalysatoren, wie Amine oder Hydroxylaminderivate, hergestellt werden. Besonders geeignete Katalysatoren sind, wie in der DE-PS 3 523 206 beschrieben, Carbamatderivate niedrig siedender Amine. Bevorzugt als Organyloxygruppe ist der Methoxyrest. Besonders bevorzugt ist am Kettenende die Dimethoxymethylsilyl-Gruppe, die aus α,ω-Dihydroxypolydimethylsiloxanen und Methyltrimethoxysilan erhalten werden kann. Die Erfindung läßt sich sinngemäß auch auf Polysiloxane anwenden, die außer Methylresten noch andere Substituenten, beispielsweise Phenylgruppen, enthalten.

Die als Bestandteile (2) genannten α,ω-Bis-(trimethylsiloxy)-polydimethylsiloxane sind bekannt und handelsüblich. Diese weichmachenden Polysiloxane können ganz oder teilweise durch andere Polysiloxane oder durch Nichtsiliconmaterialien ersetzt werden. Als Beispiele für anderer bereits bekannte Siliconweichmacher können Polymere bestehend aus CH₃SiO_{1.5}-, (CH₃)₂SiO- und (CH₃)₃SiO_{0.5}-Einheiten genannt werden.

Die Alkoxysilane (3) können gleich oder verschieden von denen sein, die zur Herstellung des Polsiloxans (1) eingesetzt werden. Als Beispiele können CH₃Si(OCH₃)₃, Si(OC₂H₅)₄, CH₂=CH-Si(OC₂H₅)₃, C₆H₅Si[OCH(CH₃)C₂H₅]₃ und CH₃Si(O n-C₃H₇)₃ genannt werden.

Als Aminoalkylalkoxysilane (4) eignen sich Verbindungen wie H₂NCH₂CH₂CH₂Si(OC₂H₅)₃,
H₂NCH₂CH₂NHCH₂CH₂CH₂Si(OCH₃)₃,
H₂NCH₂CH₂CH₂SiCH₃(OC₂H₅)₂ und
HN[CH₂CH₂CH₂Si(OC₂H₅)₃]₂.
Weitere Verbindungen dieses Typs wurden als Haftmittel oder Vernetzer für Siliconsysteme beschrieben. Als Beispiel kann die US-PS 3 888 815 genannt werden.

Als Füllstoffe (5) kommen verstärkende Füllstoffe wie pyrogene oder gefällte Kieselsäure und gefällte Kreide sowie nicht verstärkende mineralische Materialien wie Carbonate (Kreide, Dolomit), Silicate (Ton, Schiefermehl, Glimmer, Talc, Wollastonit), SiO₂ (Quarz, Diatomeenerde) und Ruß in Frage. Die Oberflächen der Füller können durch bekannte Hydrophobierungsmittel wie langkettige Carbonsäuren und reaktionsfähige Silane modifiziert sein.

Als Metallkatalysatoren (6) eignen sich insbesondere Derivate des Titans, des Aluminiums und des Zinns. Bevorzugt sind Zinnkatalysatoren, besonders bevorzugt Dialkylzinndicarboxylate, beispielsweise (C₄H₉)₂Sn(OCOCH₃)₂, (C₈H₁₇)₂Sn(OCOC₁₁H₂₃)₂ und (C₄H₉)₂Sn[OCOCH(C₂H₅)C₄H₉]₂.

Als Beispiele für die Amidosilane (7) können genannt werden:
(CH₃)₃SiN(CH₃)COC₆H₅,
(CH₃)₂Si[N(CH₃)COC₆H₅]₂,
CH₃(CH₂=CH)Si[N(CH₃)COC₆H₅]₂,
CH₃(C₆H₅)Si[N(CH₃)COC₆H₅]₂,
CH₃(C₂H₅O)Si[N(CH₃)COC₆H₅]₂,
CH₃(C₂H₅O)₂SiN(CH₃)COC₆H₅,
CH₃(CH₃O)Si[N(CH₃)COC₆H₅]₂ und
CH₃[C₂H₅(CH₃)CHO]₂SiN(CH₃)COC₆H₅.
Der N-Methylbenzamidrest kann durch am Aromaten substituierte N-Methylcarbonamidreste ersetzt werden, ohne daß hieraus ein Vorteil resultiert. Das Gleiche gilt für den Ersatz des N-Methylrests durch N-Ethyl- oder N-Propylgruppen. Bevorzugt sind bei Raumtemperatur flüssige Silane wie (CH₃)₃SiN(CH₃)COC₆H₅ oder CH₃(C₂H₅O)Si[N(CH₃)COC₆H₅]₂. Die Herstellung von N-Methylbenzamidosilanen ist bekannt. Man geht von den entsprechenden Chlorsilanen aus und setzt sie in Gegenwart von Säurefängern mit N-Methylbenzamid um. Als Säurefänger eignen sich beispielsweise Amine wie Triethylamin.

Von DE-PS 3 114 773 her ist es bekannt, daß die Aminoalkylsilane (4) beim Vermischen mit den Amidosilanen (7) unter Abspaltung von freiem Amid zu den entsprechenden silylierten Aminoalkylsilanen reagieren, beispielsweise nach
(CH₃)₃SiN(CH₃)COC₆H₅ + H₂NCH₂CH₂CH₂Si(OC₂H₅)₃ → (CH₃)₃SiNHCH₂CH₂CH₂Si(OC₂H₅)₃ + C₆H₅CONHCH₃
oder
CH₃(C₂H₅O)Si[N(CH₃)COC₆H₅]₂ + 2 H₂NCH₂CH₂CH₂SiCH₃(OCH₃)₂ → CH₃(C₂H₅O)Si[NHCH₂CH₂CH₂SiCH₃(OCH₃)₂]₂ + 2 C₆H₅CONHCH₃.

Deshalb können auch silylierte Aminoalkylsilane, wie sie bei diesen Reaktionen gebildet werden, direkt eingesetzt werden. Hierdurch ergibt sich jedoch kein Vorteil, denn es hat sich herausgestellt, daß der gewünschte Stabilisierungseffekt durch die Amidosilane (7) nur dann erzielt werden kann, wenn im Endprodukt noch eine ausreichende Menge an nicht abreagierten Amidosilylgruppen vorliegt. Die Amidosilylgruppen müssen deshalb im Überschuß zu den Aminoalkylsilanen (4) eingesetzt werden.

Die erfindungsgemäßen Massen können, wie bei feuchtigkeitshärtenden Siliconpasten üblich, in Planetenmischern, Butterfly-Mischern, Dissolvern, kontinuierlich arbeitenden Mischschnecken oder anderen für die Pastenherstellung geeigneten Geräten hergestellt werden. Die Produkte werden in luftdicht verschließbare Gebinde, beispielsweise Kartuschen, abgefüllt. Beim Herstellungsprozeß muß Kontakt mit der Luftfeuchtigkeit so weit wie möglich vermieden werden.

Die folgenden Beispiele sollen die Erfindung näher erläutern:

### Beispiel 1

In einem Planetenmischer wurden 46 Gew.-Teile eines Polydimethylsiloxans mit - OSi(OCH₃)₂CH₃-Endgruppen, das eine Viskosität von 50 Pas besaß, mit 19 Gew.-Teilen eines Polydimethylsiloxans mit -OSi(CH₃)₃-Endgruppen (Viskosität 0,1 Pas) und mit 26 Gew.-Teilen eines mit Stearinsäure behandelten Kreidefüllers vermischt. Danach wurden 2 Gew.-Teile eines Silans der Zusammensetzung CH₃Si[N(CH₃)COC₆H₅]₂OC₂H₅ eingemischt. Durch Zugabe von 5 Gew.-Teilen einer hydrophoben pyrogenen Kieselsäure, 0,8 Gew.-Teilen eines Silans mit der Formel H₂NCH₂CH₂CH₂Si(OC₂H₅)₃ und 0,1 Gew.-Teilen einer Katalysatorlösung, bestehend aus 65 % (C₄H₉)₂Sn[OCOCH(C₂H₅)C₄H₉]₂ und 35 % Toluol wurde der Ansatz vervollständigt.

Die Paste wurde zur Beurteilung der mechanischen Eigenschaften zu einem 2 mm dicken Prüffell ausgezogen, 14 Tage lang bei 23°C und 50 % rel. Luftfeuchtigkeit ausgehärtet und dann nach DIN 53 504 geprüft:

| | |
|---|---|
| Zugfestigkeit | 1,1 MPa |
| E-Modul 100 % | 0,57 MPa |
| Bruchdehnung | 320 % |

Zur Beurteilung des Vernetzungsverhaltens und der Haftung wurde auf einer Glasplatte ein 4 mm dickes Prüffell auf eine Fläche von 40 mal 60 mm aufgetragen. Nach 24 Stunden war das Material bis zur Glasoberfläche durchgehärtet und konnte nicht mehr ohne kohäsiven Riß vom Untergrund abgezogen werden.

Die Lagerstabilität der unvulkanisierten Paste wurde mit Hilfe eines Schnelltests beurteilt. Hierzu wurde der Dichtstoff in Tuben abgefüllt und bei 100°C gelagert. Noch nach 4-tägiger Lagerung vernetzte das Material zu einem gebrauchsfähigen Elastomer.

### Beispiel 2 (Vergleich):

Beispiel 1 wurde so abgeändert, daß anstelle des dort verwendeten Amidosilans 2 Gew.-Teile eines Silans der Formel CH₃Si[N(CH₃)COC₂H₅]₂OC₂H₅ eingesetzt wurden.

Mechanische Eigenschaften nach DIN 53 504:

| | |
|---|---|
| Zugfestigkeit | 1,1 MPa |
| E-Modul 100 % | 0,45 MPa |
| Bruchdehnung | 380 % |

Das 4 mm dicke Prüffell war wie in Beispiel 1 nach 24 Stunden bis auf die Glasoberfläche durchgehärtet, wies aber keine Haftung zum Untergrund auf. Der Dichtstoff konnte auch 48 Stunden nach dem Auftragen noch leicht vom Glas abgezogen werden.

### Beispiel 3 (Vergleich):

Beispiel 1 wurde so abgeändert, daß das dort verwendete Amidosilan weggelassen wurde. Nach 4-tägiger Lagerung der unvulkanisierten Paste bei 100°C fand unter Einwirkung von Luftfeuchtigkeit keine Vernetzung mehr statt.

### Beispiel 4

Beispiel 1 wurde so abgeändert, daß anstelle des dort verwendeten Amidosilans 2 Gew.-Teile eines Silans der Zusammensetzung (CH₃)₃SiN(CH₃)COC₆H₅ verwendet wurden.

Die mechanischen Eigenschaften nach DIN 53 504 waren:

| | |
|---|---|
| Zugfestigkeit | 0,9 MPa |
| E-Modul 100 % | 0,33 MPa |
| Bruchdehnung | 480 % |

Das Material härtete in 4 mm dicker Schicht innerhalb 24 Stunden durch und wies gute Haftung zur Glasoberfläche auf. Im Schnelltest auf Lagerstabilität war die Paste nach 4 Tagen bei 100°C noch problemlos unter Feuchtigkeitseinfluß vernetzbar.

## Patentansprüche

1. Unter Ausschluß von Feuchtigkeit lagerfähige und bei Zutritt von Feuchtigkeit härtende Polysiloxanmassen, erhältlich durch Vermischen von
(1) 100 Gew.-Teilen eines Polydimethylsiloxans, das Diorganyloxy-organosilyl- oder Triorganyloxysilyl-Endgruppen enthält und eine Viskosität zwischen 0,1 und 1000 Pas besitzt,
(2) 0 bis 100 Gew.-Teilen eines α,ω-Bis-(trimethylsiloxy)-polydimethylsiloxans, das eine Viskosität zwischen 0,04 und 10 Pas besitzt,
(3) 0 bis 5 Gew.-Teilen eines Alkoxysilans der Zusammensetzung
R¹ₐSi(OR²)₄₋ₐ ,
wobei R¹ ein gegebenenfalls substituierter aliphatischer, olefinisccher oder aromatischer Kohlenwasserstoffrest mit 1 bis 6 C-Atomen, R² ein aliphatischer Kohlenwasserstoffrest mit 1 bis 6 C-Atomen und a gleich 0 oder 1 sein kann,
(4) 0,1 bis 5 Gew.-Teilen eines Aminoalkylalkoxysilans, das eines oder mehrere über mindestens 3 C-Atome mit einem Siliciumatom verbundene basische Stickstoffatome enthält,
(5) 5 bis 250 Gew.-Teilen eines verstärkenden oder eines nicht verstärkenden Füllers oder eines Füllstoffgemisches,
(6) 0,01 bis 2 Gew.-Teilen eines metallorganischen Katalysators und
(7) 0,5 bis 5 Gew.-Teilen eines Amidosilans,
dadurch gekennzeichnet, daß das Amidosilan (7) die Zusammensetzung 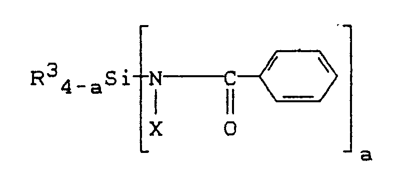 besitzt, wobei als Rest R³ ein gegebenenfalls substituierter aliphatischer, olefinischer oder aromatischer Kohlenwasserstoffrest mit 1 bis 6 C-Atomen, ein gegebenenfalls verzweigter Alkoxyrest mit 1 bis 6 C-Atomen oder ein Gemisch solcher Substituenten vorliegt, X für einen Alkylrest mit 1 - 4 C-Atomen, bevorzugt Methyl, steht und a die Werte 1 oder 2 annehmen kann, wobei das Amidosilan (7) im Verhältnis zur Komponente (4) im Überschuß eingesetzt wird.

## Claims

1. Polysiloxane compositions storable in the absence of moisture and hardening in the presence of moisture, obtainable by mixing
(1) 100 parts by weight of a polydimethyl siloxane terminated by diorganyloxyorganosilyl or triorganyloxysilyl groups and having a viscosity of 0.1 to 1000 Pas,
(2) 0 to 100 parts by weight of an α,ω-bis-(trimethyl-siloxy)-polydimethyl siloxane which has a viscosity of from 0.04 to 10 Pas,
(3) 0 to 5 parts by weight of an alkoxysilane having the following formula
R¹ₐSi(OR²)₄₋ₐ
in which
R¹ is an optionally substituted aliphatic, olefinic or aromatic C₁₋₆ hydrocarbon radical, R² is an aliphatic C₁₋₆ hydrocarbon radical and a may be 0 or 1,
(4) 0.1 to 5 parts by weight of an aminoalkyl alkoxysilane containing one or more basic nitrogen atoms attached to a silicon atom through at least 3 C atoms,
(5) 5 to 250 parts by weight of a reinforcing or non-reinforcing filler or filler mixture,
(6) 0.01 to 2 parts by weight of an organometallic catalyst and
(7) 0.5 to 5 parts by weight of an amidosilane,
characterized in that the amidosilane (7) has the following formula 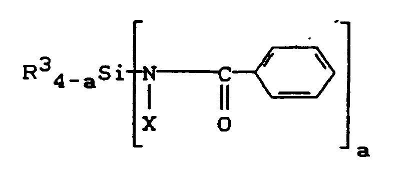 in which R³ is an optionally substituted aliphatic, olefinic or aromatic C₁₋₆ hydrocarbon radical, an optionally branched C₁₋₆ alkoxy radical or a mixture of such substituents, X is a C₁₋₄ alkyl radical, preferably methyl, and a may assume a value of 1 or 2, the amidosilane (7) being used in excess in relation to component (4).

## Revendications

1. Compositions à base de polysiloxannes pouvant être entreposées à l'abri de l'humidité et durcissant au contact de l'humidité, obtenues par mélange
(1) de 100 parties en poids d'un polydiméthylsiloxanne qui contient des groupes diorganyloxy-organosilyle ou triorganyloxysilyle terminaux et qui possède une viscosité comprise entre 0,1 et 1000 Pa.s,
(2) 0 à 100 parties en poids d'un α,ω-bis-(triméthylsiloxy)polydiméthylsiloxanne qui possède une viscosité comprise entre 0,04 et 10 Pa.s,
(3) 0 à 5 parties en poids d'un alkoxysilane de composition
R¹ₐSi(OR²)₄₋ₐ,
où R¹ peut représenter un reste hydrocarboné aliphatique, oléfinique ou aromatique éventuellement substitué ayant 1 à 6 atomes de carbone, R² peut représenter un reste d'hydrocarbure aliphatique ayant 1 à 6 atomes de carbone et a peut avoir la valeur 0 ou 1,
(4) 0,1 à 5 parties en poids d'un aminoalkylalkoxysilane qui contient un ou plusieurs atomes d'azote basiques liés à un atome de silicium par l'intermédiaire d'au moins 3 atomes de carbone,
(5) 5 à 250 parties en poids d'une charge renforçante ou non renforçante ou d'un mélange de charges,
(6) 0,01 à 2 parties en poids d'un catalyseur organométallique et
(7) 0,5 à 5 parties en poids d'un amidosilane,
caractérisées en ce que l'amidosilane (7) a la composition : 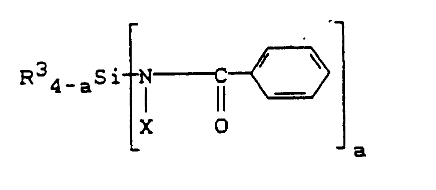 où le reste R³ est un reste d'hydrocarbure aliphatique, oléfinique ou aromatique éventuellement substitué ayant 1 à 6 atomes de carbone, un reste alkoxy éventuellement ramifié ayant 1 à 6 atomes de carbone ou un mélange de tels substituants, X est un reste alkyle ayant 1 à 4 atomes de carbone, de préférence le reste méthyle, et a peut prendre les valeurs 1 ou 2, l'amidosilane (7) étant utilisé en excès par rapport au composant (4).
